Europäisches Patentamt

European Patent Office

Office européen des brevets

(11) Publication number: **0 275 578 B1**

# EUROPEAN PATENT SPECIFICATION

(45) Date of publication of patent specification: **08.04.92** (51) Int. Cl.⁵: **G06K 19/04**

(21) Application number: **87202381.7**

(22) Date of filing: **02.12.87**

(54) **Device for setting, at choice, one or more bar codes each representing a data character or a symbol.**

(30) Priority: **03.12.86 NL 8603080**

(43) Date of publication of application:
**27.07.88 Bulletin 88/30**

(45) Publication of the grant of the patent:
**08.04.92 Bulletin 92/15**

(84) Designated Contracting States:
**BE DE FR GB IT NL SE**

(56) References cited:
**EP-A- 0 126 915**
**WO-A-83/04446**
**DE-A- 3 343 144**
**GB-A- 2 018 069**

(73) Proprietor: **Koninklijke PTT Nederland N.V.**
**P.O. Box 95321**
**NL-2509 CH The Hague(NL)**

(72) Inventor: **Bosman, Frans Leendert**
**30b Strobloemstraat**
**NL-3053 EX Rotterdam(NL)**

EP 0 275 578 B1

## Description

## A. Background of the invention

### 1. Field of the invention

The invention generally relates to a device serving to provide an object, such as for example a container, with a code which can be set at choice, thus characterizing the object.

More in particular the invention relates to a device for displaying, at choice, optically readable sets of characters represented by a barcode, comprising a housing with a window opening, and a plurality of movable elements supported by said housing and movable with respect to said housing and to each other, each movable element being provided with a collection of bar coded characters all of which having their line-segment shaped code elements running parallel with respect to one another, each movable element being movable, independently of the other movable elements, in such a way that each of its characters can be made visible one at a time through the window opening and that the currently visible character together with the one visible character of each of the other movable elements thus constitute one of the said sets of characters, and that within the frame of each barcoded character the analogue representation of the same is shown in such a way that it can be perceived by the human eye.

### 2. State of the art

Particularly in transport systems there is a need to provide, whether or not temporary, all sort of receptacles with information, e.g. about their contents, routing, destination, etc. This information should be preferably in a machine readable form and with its analog interpretation suitable for human inspection. Moreover it should be in an easily changeable form in order to meet alteration of the contents, routing, destination, etc. of the receptacles. A common machine readable form is a barcoded one. Now adays there are various sorts of barcodes generally known, which codes can be read out by known barcode scanners. The UK patent application GB-A-2018069 discloses a display apparatus for a meter comprising a bank of coaxial counter wheels on their periphery provided with elements of an optical barcode known perse, representing instead of or in addition to conventional numbers. The line segments of each barcode element are running parallel with respect to one another and in alignment with the direction along which the elements can be brought successively into register with a common window upon rotation of the wheels. Within the common window the several visible elements constitute barcoded meter readings, which can be read by scanning a light pen across the window. Such a known apparatus, when adapted for the above-indicated purpose, would have the following disadvantages. It would need special logic in order to discriminate against false lines, arising from the gaps between the wheels. Its size would be rather clumsy for being connected with a receptacle. The PCT-application WO-A-8304446 discloses a display device comprising ruler-shaped slidable elements separately supported by a housing, the slidable elements being provided with optically readable characters in such a way that the characters may all lie in substantially the same plane. A combination of what is known from these two citations may result in a display device of a sort as described above, which does have a suitable size for the above-indicated purpose. However it would still have the disadvantage of the need for special logic in order to discriminate against false lines, arising from the gaps between the slidable elements.

## B. Summary of the invention

The object of the present invention is to provide a handy device for the purpose described above, which does not have the disadvantage of the cited prior art. A display device is according to the invention therefore characterized in that the code elements of the different bar coded characters of said collection are disposed in alignment with the direction along which the movable elements are slidable; each line-shaped transition between adjacent parts movable with respect to each other and visible through the window opening is so narrow as to form part of a relevant character made visible through said window opening. In a prefered embodiment each set of characters, made visible through the window opening, includes a barcode representation of a start and a stop character.

Such a device has the advantage that the codes set by it can be read out by making use of barcode reading devices obtainable on the market without the need for adding special logic for getting reliable readings.

If desired the movable elements forming part of a device according to the invention can have the design of a ruler, of a circular ring or of an endless substantially flat and flexible strip.

## C. Short description of the drawing

Fig. 1   shows a diagrammatical representation of an embodiment which is illustrative of the invention and with which a three-digit number can be set in a bar code form;

Fig. 2    shows a detailed representation of the way in which the different bar codes representing the different digits have been disposed on the three movable elements of the embodiment according to Fig. 1;

Fig. 3    shows a diagrammatical representation of a top view of an alternative embodiment with which a three-digit number can be set in a bar code form;

Fig. 4    shows a cross-sectional view according to the line IV-IV in Fig. 3 of the embodiment represented by that figure;

Fig. 5    shows a diagrammatical representation of a top view of an embodiment which is illustrative of the invention and with which a two-digit number can be set in a bar code form; and

Fig. 6    shows a diagrammatical cross-sectional view according to the line VI-VI in Fig. 5 of the embodiment represented by that figure.

D. References

1. European patent application 0155050
2. INTERMEC, December 1984 "Barcode Symboloci" - Some observations on theory and practice" by David C. Alles.

E. Description of the embodiments

For a further elucidation of the invention some embodiments will be described hereinafter with reference to the drawing.

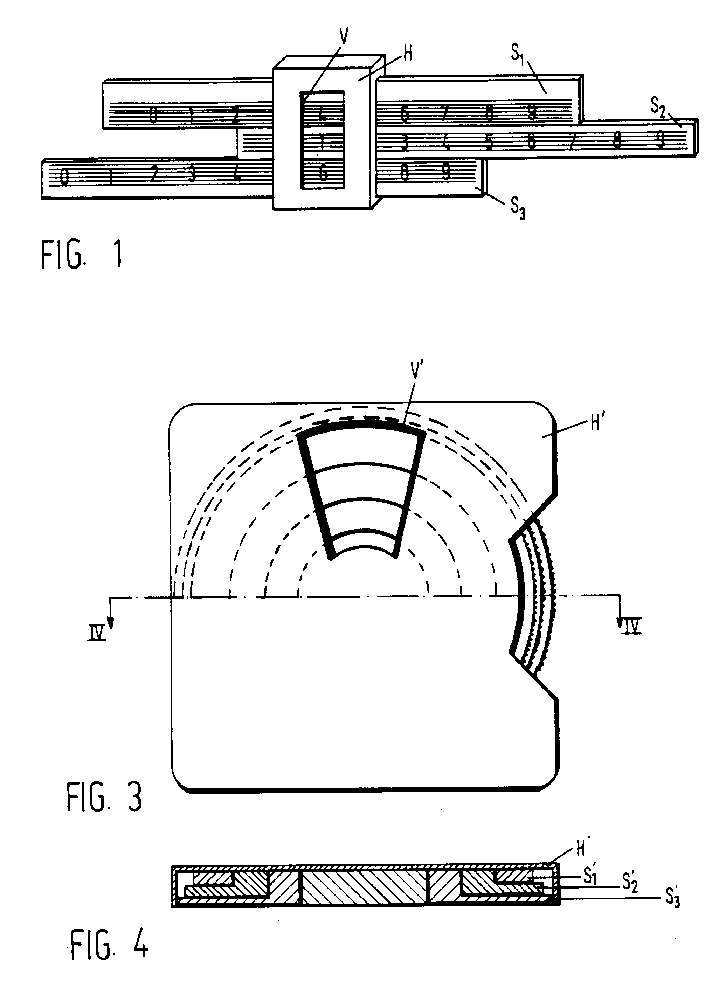

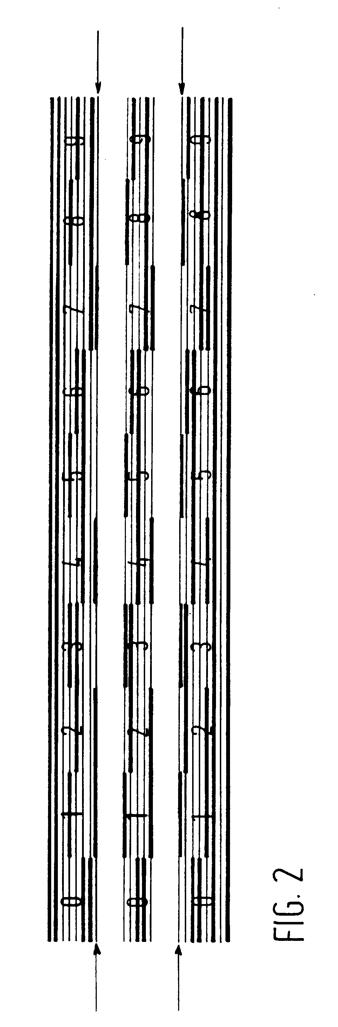

The device diagrammatically shown in figure 1 is illustrative of an embodiment with which it will be possible to set, at choice, a number consisting of three digits of the collection 000-999 and to represent it in a bar code form. The device comprises a substantially flat housing H, which supports three movable elements $S_1$, $S_2$ and $S_3$, which can be moved with respect to this housing and along one another. The movable elements in this embodiment have the shape of a ruler. Each of the movable elements is provided with a collection of digits (data characters) 0-9 on the area turned to the "reading side". The housing is provided with a window opening V. A construction, which is not shown in the figures, makes it possible to set each of these movable elements into ten different and discrete positions in the houding, while at the same time a digit corresponding with such positions will become visible via the window V. According to the invention each of the digits with which such a movable element is thus provided, is also represented by a bar code with line-segment shaped code elements which are dis tinguishable from one another by their thickness, which bar code is known per se. More in particular each digit (data character) is interpreted by a two-out-of-five bar code as described in for example reference 2 under D. According to a further aspect of the invention the code elements of the different digits with which one and the same movable element is provided, are disposed in alignment with respect to each other and orientated in the longitudinal direction (or the direction in which the movable element can be moved) of the relevant movable element. The above has been diagrammatically represented in figure 1 and in the situation shown by this figure the three-digit number "416" is readably represented in an "analog form" as well as in a "bar code form". By means of a bar-code reading device known per se and obtainable on the market any bar-code combination thus set can be read out. The "analog" representation of any bar code representing a digit which is disposed within the frame of that bar code has a property, such as a colour, which is perceptible for the human eye, but to which a bar-code reading device of the type mentioned is insensitive. For example the digits 0-9 are disposed in a red colour, notably in such a way that the added bar code will be read unmutilated. For example the bar code represented in a black colour has been written over an analog interpretation represented in a red color.

Figure 2 shows a detailed representation of the way in which the bar code has been disposed on the three movable elements $S_1$, $S_2$ and $S_3$ of the embodiment according to figure 1, a start signal respectively a stop signal being added to each digit (data character) of movable element $S_1$ respectively movable element $S_3$. In the case of the above-mentioned two-out-of-five code such a start signal respectively stop signal is represented in bar code by three code elements, more in particular two thick lines followed by a thin line (110) respectively a sequence of a thick, a thin and a thick line (101). The arrows in figure 2 indicate the physical line-shaped transitions between neighbouring movable elements. The bar codes have been disposed on the movable elements in such a way that such transitions will form a code element of a relevant code. In case such a code element has to represent a "1", the relevant thick line segment, lying along the transition, is disposed in its entirety either on the one movable element or on the neighbouring one. In other words, it should be prevented that a relevant transition "intersects" a code element representing a "1" in a longitudinal direction.

For the sake of completeness it is remarked that when the present device comprises only one movable element, so that only one-digit numbers 0-9 can be set, a start signal as well as a stop signal will have to be added to each data character (0-9) of this collection.

In the configuration represented in figure 2 the upper collection comprises the designations for the hundreds, with added start signals, the middle collection the designations for the tens and the lower collection the designations for the units with added stop signals. In this case the transition between the movable elements $S_1$ and $S_2$ is made use of for the last bit (code element) of the codes disposed on movable element $S_1$, whereas for the first bit of the codes disposed on movable element $S_3$, or for the last bit of the codes disposed on movable element $S_2$ the transition between the movable element $S_2$ and $S_3$ is used.

In the embodiment according to the figures 3 and 4 the ruler-shaped movable elements $S_1$, $S_2$ and $S_3$ of the embodiment according to the figures 1 and 2 have been replaced by annular movable elements $S'_1$, $S'_2$ and $S'_3$ concentrically mounted in the housing H′. As diagrammatically shown in figure 3, the housing H′ is provided on one side with a recess due to which it will be possible to put each of the movable elements in the desired position opposite to the window V′.

Figure 4 diagrammatically shows a construction due to which it will be possible to turn said movable elements $S'_1$, $S'_2$ and $S'_3$ individually in the housing H′ until they have reached the desired position. In fact the codes together with the added start signals, stop signals and analog representations are disposed on the movable elements $S'_1$, $S'_2$ and $S'_3$ in the same way as illustrated in figure 2.

An embodiment of the sort represented in the figures 3 and 4 can be used with advantage in those cases in which the space available for the device has more the shape of a square than that of a rectangle.

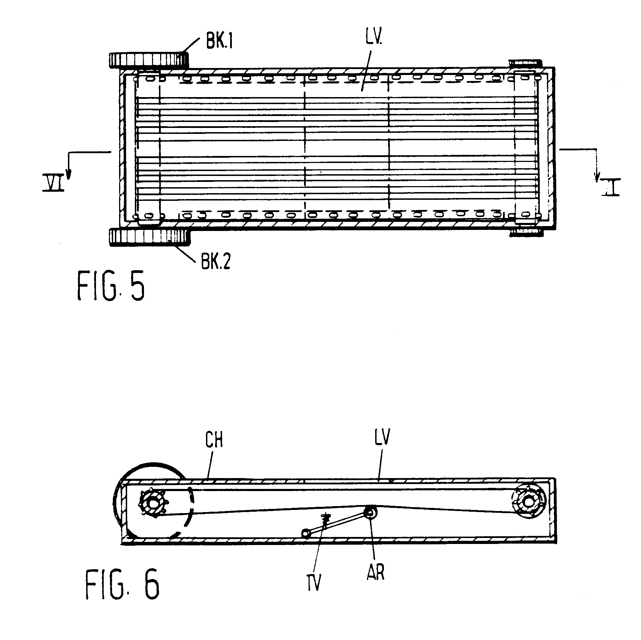

Figures 5 and 7 are illustrative of a relatively compact embodiment of a device according to the invention. An embodiment of this type can be used with advantage when a one-digit or a two-digit number will suffice. Each movable element in this embodiment is designed as an endless substantially flat flexible strip. The strip shown in figure 5 as the upper respectively lower strip has been provided with the digits 0-9 in a similar way as in the case with respect to a relevant movable element in the embodiments described in what precedes, which digits designate in this case the tens respectively the units of a number to be set which consists of two digits. A start signal respectively a stop signal has been added to each code on the upper respectively lower strip. The upper respectively lower strip can be brought into the desired position opposite to the reading window LV by means of a special control knob BK1 respectively BK2.

Figure 6 diagrammatically shows the way in which a relevant strip has been mounted in the cassette-shaped housing CH. This construction is comparable with a generally known construction such as used for film feed in a photo camera. In the embodiment according to the figures 5 and 6 the endless strip is tightened by means of a pressure roller AR tightened by a draw spring TV.

Generally speaking the transition between neighbouring movable elements is used to represent a code element ("0"-thin line; "1"-thick line). Moreover, the area of the movable element on which the relevant bar-code patterns have been disposed has to be smooth to prevent the scanning beam of the reading device from causing false information due to the effects of reflection. The plane in which the scanning beam sweeps has to be transversally orientated with respect to the barcode pattern to be read out, notably in such a way that all the code elements of such a pattern will be intersected by said plane.

As a rule the available bar-code reading devices can be programmed in a simple way for reading out n data characters (for example n-digit numbers), in which n can be 1, 2, 3, 4....etc.

**Claims**

1. Display device for displaying optically readable sets of characters represented by a barcode comprising:
   - a housing (H; H'; CH) with a window opening (V; V'; LV); and
   - a plurality of movable elements (S1, S2, S3; S1', S2', S3') supported by said housing and movable with respect to said housing and to each other;
   - each movable element (S1, S2, S3; S1', S2', S3') being provided with a collection of bar coded characters (Fig. 2) all of which having their line-segment shaped code elements (0, ---, 9) in alignment with the direction along which the movable elements (S1, S2, S3; S1', S2', S3') are movable, the line-segment shaped code elements keeping at a constant distance with respect to one another;
   - each movable element (S1, S2, S3; S1', S2', S3') being movable, independently of the other movable elements, in such a way that each of its characters (0, ---, 9) can be made visible one at a time through the window opening (V; V'; LV); and that the currently visible character together with the one visible character of each of the other movable elements thus constitute one of the said sets of characters; and that within the frame of each barcoded character the analogue representation (digits 0, ---, 9) of the same is shown in such a way that it can be perceived by the human eye; characterized in that each line-shaped transition (arrows in Fig. 2) between adjacent parts movable with respect to each other and visible through the window opening (V; V'; LV) is so narrow as to form part of a relevant character made visible through said window opening.

2. Device in accordance with claim 1, characterized in that each set of characters, made visible through the window opening (V; V'; LV), includes a barcode representation of a start and a stop character.

3. Device in accordance with claim 1 or 2, characterized in that each of the movable elements has the shape of a ruler (S1, S2, S3).

4. Device in accordance with claim 1 or 2, characterized in that each of the movable elements has the shape of an circular ring (S1', S2', S3').

5. Device in accordance with claim 1 or 2, characterized in that each of the movable elements has the shape of an endless substantially flat and flexible strip (Fig. 5 and 6).

**Revendications**

1. Dispositif d'affichage pour afficher des séries de caractères lisibles par voie optique et représentés par un code à barres, comprenant:
   - un boîtier (H; H'; CH) avec une ouverture formant une fenêtre (V; V'; LV); et
   - une pluralité d'éléments mobiles (S1, S2, S3; S1', S2', S3') supportés par le boîtier et déplaçables par rapport à ce boîtier et l'un par rapport à l'autre;
   - chaque élément mobile (S1, S2, S3; S1', S2', S3') étant pourvu d'une collection de caractères codés en barres (figure 2) dont tous les caractères ont leur éléments de code (0,..., 9), en forme de segments de ligne, disposés en alignement avec la direction suivant laquelle les éléments mobiles (S1, S2, S3; S1', S2', S3') sont déplaçables, les éléments de code, en forme de segments de ligne, étant maintenus à une distance constante les uns par rapport aux autres;
   - chaque élément mobile (S1, S2, S3; S1' S2', S3') étant déplaçable, indépendamment des autres éléments mobiles, de manière que chacun de ses caractères (0,...,9) puisse être rendu visible à travers la fenêtre (V; V'; LV), à raison d'un caractère à la fois, que le caractère visible à un moment donné constitue, ensemble avec le caractère visible de chacun des autres éléments mobiles, l'une desdites séries de caractères, et que, à l'intérieur de la délimitation de chaque caractère codé en barres, la représentation analogique (0,...,9) de ce caractère soit montrée de manière qu elle puisse être perçue par l'oeil humain;
caractérisé en ce que
chaque transition en forme de ligne (flèches sur la figure 2) entre des portions adjacentes mobiles l'une par rapport à l'autre et visibles à travers la fenêtre (V; V'; LV) est si étroite qu'elle fait partie d'un caractère correspondant rendu visible à travers la fenêtre.

2. Dispositif selon la revendication 1, caractérisé en ce que chaque série de caractères rendue visible à travers la fenêtre (V; V'; LV), comporte une représentation en code à barres d'un caractère de départ et d'un caractère d'arrêt.

3. Dispositif selon la revendication 1 ou 2, caractérisé en ce que chacun des éléments mobiles a la forme d'une réglette (S1, S2, S3).

4. Dispositif selon la revendication 1 ou 2, caractérisé en ce que chacun des éléments mobiles a la forme d'un anneau circulaire (S1', S2' S3').

5. Dispositif selon la revendication 1 ou 2, caractérisé en ce que chacun des éléments mobiles a la forme d'une bande sans fin, sensiblement plane et flexible (figures 5 et 6).

**Patentansprüche**

1. Display-Vorrichtung zur Anzeige von optisch lesbaren strichcodierten Zeichengruppen,
   - mit einem eine Fensteröffnung (V; V'; LV) aufweisenden Gehäuse (H; H'; CH), und
   - mit einer Mehrzahl beweglicher Elemente (S1, S2, S3; S1', S2', S3'), die von diesem Gehäuse getragen und untereinander und bezüglich dieses Gehäuses bewegbar sind,
   - wobei jedes bewegliche Element (S1, S2, S3; S1', S2', S3') mit einer Gruppe von strichcodierten Zeichen (Fig. 2) versehen ist, deren balkenförmige Codeelemente (0, ---, 9) alle in der Richtung ausgerichtet sind, entlang welcher die beweglichen Elemente (S1, S2, S3; S1', S2', S3') bewegbar sind, indem die balkenförmigen Codeelemente sich zueinander in einem konstanten Abstand befinden,

-   wobei jedes bewegliche Element (S1, S2, S3; S1', S2', S3') derart unabhängig von den anderen beweglichen Elementen bewegbar ist, dass jedes dieser Zeichen (0, ---, 9) für sich durch die Fensteröffnung (V; V'; LV) sichtbar gemacht werden kann, so dass das betreffende sichtbare Zeichen zusammen mit dem jeweiligen sichtbaren Zeichen jedes der anderen beweglichen Elemente eine der besagten Zeichengruppen darstellt, und wobei innerhalb des Rahmens eines jeden strichcodierten Zeichens die analoge Darstellung (Zahlen 0, ---, 9) desselben derart gezeigt wird, dass es vom menschlichen Auge wahrnehmbar ist,

dadurch gekennzeichnet, dass jeder balkenförmige Übergang (Pfeile in Fig. 2) zwischen benachbarten Teilen, die untereinander bewegbar und durch die Fensteröffnung (V; V'; LV) sichtbar sind, so eng ist, dass er am relevanten durch diese Fensteröffnung sichtbar gemachten Zeichen teilnimmt.

2.  Vorrichtung nach Anspruch 1, dadurch gekennzeichnet, dass jede durch die Fensteröffnung (V; V'; LV) sichtbar gemachte Zeichengruppe eine strichcodierte Darstellung eines Anfangs- und Endzeichens umfasst.

3.  Vorrichtung nach Anspruch 1 oder 2, dadurch gekennzeichnet, dass jedes der beweglichen Elemente in Form eines Lineals (S1, S2, S3) ausgestaltet ist.

4.  Vorrichtung nach Anspruch 1 oder 2, dadurch gekennzeichnet, dass jedes der beweglichen Elemente in Form eines runden Rings (S1', S2', S3') ausgestaltet ist.

5.  Vorrichtung nach Anspruch 1 oder 2, dadurch gekennzeichnet, dass jedes der beweglichen Elemente in Form eines endlosen im wesentlichen flachen und flexiblen Streifens (Fig. 5 und 6) ausgestaltet ist.

FIG. 1

FIG. 3

FIG. 4

FIG. 2

8

BK.1    LV.

VI

BK.2

FIG. 5

CH    LV

TV    AR

FIG. 6